# EUROPEAN PATENT APPLICATION

(11) **EP 1 847 383 A1**
(43) Date of publication of application: **24.10.2007**
(21) Application number: 06008354.0
(22) Date of filing: 21.04.2006
(51) Int. Cl.: B32B 7/08, B32B 5/26, B60R 13/08

(54) **Acoustic composite and twin-shell lightweight trim part comprising such a composite**

(71) Applicant: Rieter Technologies AG, 8406 Winterthur (CH)
(72) Inventor: Delmas, Bertrand, rue des Chevries 78410 Aubergenville (FR)
(74) Representative: Alder, Hans Rudi

(57) **Abstract**

A twin-shell lightweight acoustic trim part (11), in particular a self-supporting vehicle's headliner or a rear parcel shelf comprises a thermoplastic acoustically effective structural composite (5). This composite comprises at least three layers (2, 3, 4), in particular on its front side a skin layer (4), preferably a binder layer made of a thermoplastic non-woven or grid, a stiffening layer (3) made of a non-woven comprising polypropylene and glass fibres, and on its rear side a soft layer (2) consisting of a polyolefin foam. These layers are needle-punched together in order to set a desired airflow resistance R in the range of 200 Nsm⁻³ to 5000 Nsm⁻³. In a preferred embodiment, the twin-shell lightweight acoustic trim part (11) comprises a core layer (8) which contains 50 parts of elastomeric foam sticks, 20 parts of glass fibres, 10 parts of polypropylene fibres material, and 20 parts bicomponent polyester fibres and preferably comprises additional 15% of recycled elastic foam material. This trim part is designed such that the thermoplastic bonded and acoustically effective structural composite (5) allows to absorb the uneven pressure forces of the elastomeric foam material (9) of the core layer (8) in order to achieve a smooth and soft touch feeling.

## Description

Present invention relates to an acoustic composite in accordance with the preamble of claim 1 and a twin-shell lightweight acoustic trim part comprising such a composite.

Recyclable and lightweight multilayer trim-parts are well known in the art and for instance disclosed in US-5,976,295. This document reveals a component such as a headliner or sun visor for the interior of automotive vehicles, which component comprises a multilayer composite of polyester (PET) finishing fabric, a resilient layer of bicomponent polyester fibre padding and a relatively stiff core layer of polyester/glass fibres. These layers are consolidated and moulded under heat and pressure into a lightweight, dense, and structurally strong composite. Of course, such a trim part is not suitable to substantially absorb acoustic energy and feels stiff to touch.

A typical twin-sheet vehicle headliner is disclosed in WO 2004/089592. This documents describes a process for thermoforming such a part by using two sheets of SuperLight material, whereby in a first step a first sheet is formed in a mould applying vacuum to the lower mould part and whereby in a second step a second sheet is formed in the same mould applying vacuum to the upper mould part and whereby in a third step both parts are unified, i.e. sealed together and then cut along the desired shape. Such a twin-sheet headliner is lightweight and at the same time is stable enough to be used as self-supporting headliner. Unfortunately, this twin-sheet headliner has a poor efficiency to absorb acoustic energy, since the separate sheets are airtight and rigid. In addition, the rigidity of the sheet on the passenger side generates an unpleasant haptic feeling.

EP-0'908'303 proposes to use a fibrous batt, which is sandwiched between two fibrous mats in order to create a recyclable and biodegradable vehicle panel such as a headliner. Unfortunately, this headliner either comprises rigid outer layers that give an unpleasant haptic effect and/or is not fulfilling class 3 requirements for the acoustic performance of headliners. In addition, this vehicle panel is compression molded and difficult to manufacture due to the multitude of fibres treatment steps.

A method of making a lightweight fibrous headliner with high elasticity is disclosed in US-5,591,289. This headliner comprises a fibrous core with a cover on its front or passenger side providing an aesthetically pleasing surface and a scrim on its back or roof side providing reinforcement. The batting is needled on both sides to form integral skin layers of fibres, and then sandwiched by a scrim at its roof side and by a cover at its passenger compartment side before being placed in a heated compression mould. Unfortunately, this method does not allow to properly tuning the acoustic properties of such fibrous headliners. In addition, the cover at the passenger side feels stiff to the touch since it is bonded to a densified skin layer. Furthermore, the compression moulding process does not allow manufacturing thick parts, i.e. parts having a thickness of 2.5 cm to 8.0 cm.

The above makes evident that the known multilayer components for headliners or other self-supporting interior panels have poor acoustic characteristics and/or exhibit an unpleasant haptic effect and/or are complex and/or time-consuming, i.e. expensive to manufacture.

It is therefore the object of present invention to achieve a light weight, recyclable and self-supporting trim-part, in particular a headliner or a rear parcel shelf, which is fulfilling the acoustic requirements of class 3 or even class 4 specifications (according to the testing method PSA-Peugeot Citroen D45-5430), which provides a pleasant haptic effect, i.e. having a smooth and soft touch feeling, and which is economically to manufacture.

This object is achieved by a self-supporting twin-shell lightweight acoustic trim part in accordance with claim 6 comprising a thermoplastic bonded and acoustically effective structural composite in accordance with claim 1.

This thermoplastic acoustically effective composite is suitable for manufacturing a self-supporting twin-shell lightweight acoustic trim part, in particular a headliner or a rear parcel shelf. This composite comprises on its front side a skin layer, preferably a binder layer made of a thermoplastic non-woven or grid, a stiffening layer and on its rear side a soft layer, which layers are needle-punched together in order to set a desired airflow resistance in the range of 200 - 5'000 Nsm⁻³. Preferably, this composite comprises a layer of PP-non-woven or thermoplastic grid (25 g/m²) + a layer of glass fibre reinforced PP-nonwoven (45%PP / 55% GF, 150 - 250g/m², preferably 175 g/m²) + a layer of PO-foam (30 - 50kg/m³, 1-3 mm, preferably 33 kg/m³, 3mm). This composite performs as an acoustically effective element allowing setting the AFR-value (air-flow-resistance) in order to achieve the required acoustic performance by setting a suitable and preselected needling density or or characteristics. The polyolefin foam is at initial conditions completely closed celled, i.e. completely airtight. After the needling process, this elastic polyolefin foam layer stays air permeable. Some of the glass fibres of the stiffening layer may be introduced in the punched holes during the needling process and help to keep these holes open.

Preferred embodiments of this acoustically effective composite comprise the features of claims 2 to 5.

The twin-shell lightweight acoustic trim part in accordance with the invention comprises such a thermoplastic acoustically effective structural composite and may further comprise an air-permeable cover layer, in particular a facecloth, a malifleece or a needle felt or a back foamed textile on its front or visible face on its passenger compartment side. The trim part further comprises a multi-layer skin structure on its back face, which is substantially impermeable and a core layer between the thermoplastic acoustically effective structural composite and the multi-layer skin structure, which core layer comprises elastomeric, i.e. resilient foam material and/or fibre-felt material, preferably a blend of foam sticks or chips and fibres material. Since it is beneficial for the vacuum forming process to use for the core layer elastomeric, i.e. resilient foam material, in particular foam sticks or chips with enhanced spring force, the visible side of the composite tends to form a rough-textured or rippled surface. The present invention allows to use for the composite's soft layer a foam material with a reduced spring force, in order to achieve the desired haptic properties. This selection allows to even the unevenness of the core's surface and provides for a smooth and soft touch feeling.

The twin-shell lightweight acoustic trim part in accordance with the invention may be manufactured by a vacuum forming process, i.e. by a simple and cost-saving method. In particular, the elastomeric material of the core layer assists the vacuum forming process. This trim part is completely recyclable, exhibits a high and tuneable acoustic performance, is self-supporting and has pleasant haptic properties, i.e. has a smooth and soft touch feeling. This trim part allows saving material costs by using foam that is recovered from scraps of the production or from waste of cuts or from vehicles out of use. Furthermore, the acoustic absorption may be increased by the use of open-pored foam sticks being part of the core layer.

These and other objects, advantages, and features of the present invention will become more apparent from the following description and accompanying drawings, wherein:
- Fig. 1:: shows a schematic cross-section through an acoustically effective composite according to the invention;
- Fig. 2:: shows a schematic cross-section through a trim part comprising such an acoustically effective composite;
- Fig. 3:: shows a schematic cross-section through the trim part according to Fig. 2 in more detail;
- Fig. 4:: shows a diagram related to the acoustic properties of a trim part in accordance with the invention.

The following references are used to indicate the relevant features of the invention:
1: structural thermoplastic bonded and acoustically effective composite
2: soft layer made of a polyolefin foam
3: stiffening layer made of a non-woven
4: skin layer or binder made of a thermoplastic non-woven or grid
5: needle punched composite comprising a preselected airflow resistance
6: additional facecloth
7: multi-layer skin structure
8: core layer
9: foam material
10: fibrous material
11: twin-shell lightweight acoustic trim part
A: acoustic performance of a trim part according to the invention
B: acoustic class 3 requirements

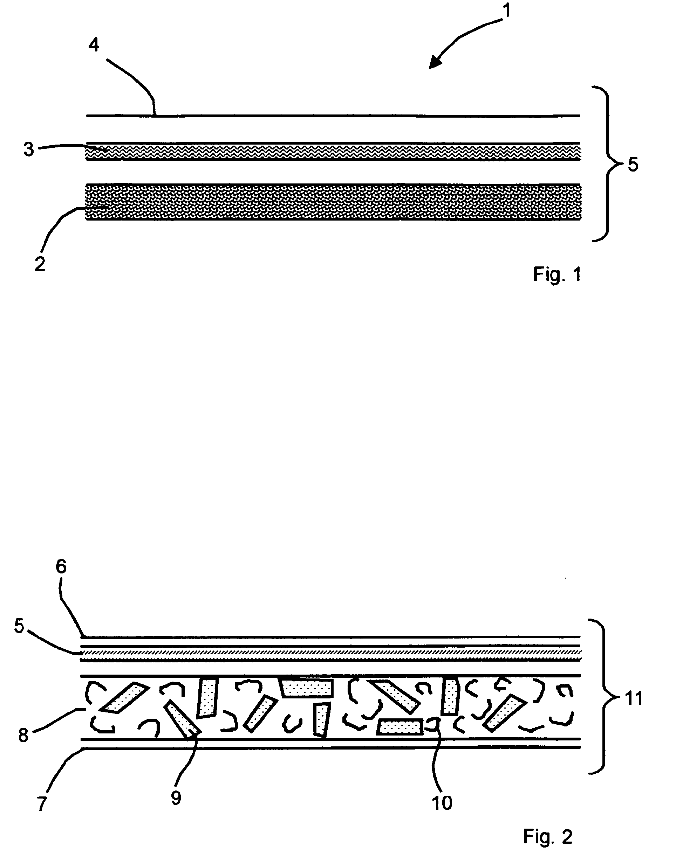

The composite (5) according to the invention and schematically shown in Fig. 1 comprises on its front side, i.e. the passenger compartment side, a skin layer (4), preferably a binder layer made of a thermoplastic non-woven or grid. A stiffening layer (3) is arranged between this skin layer (4) and a soft layer (2). The stiffening layer is made of a non-woven preferably comprising polypropylene and glass fibres and/or copolyester fibres and/or bicomponent fibres, while the soft layer (2) on the rear side consists of closed celled polyolefin foam. These three layers (2, 3, and 4) are needle-punched together in order to set a desired airflow resistance R in the range of 200 Nsm⁻³ to 5000 Nsm⁻³. The thickness of this composite (5) approximately varies between 0.5 and 6 mm after the forming process. The skin layer (4) preferably comprises 25 g/mm² of polypropylene SMMS fibres material. The stiffening layer (3) preferably comprises 150 to 250 g/m² of a non-woven material, and in particular 40% of polypropylene fibres and 60% of glass fibres. In a preferred embodiment, the soft layer (2) has a density of 30 to 90 kg/m³.

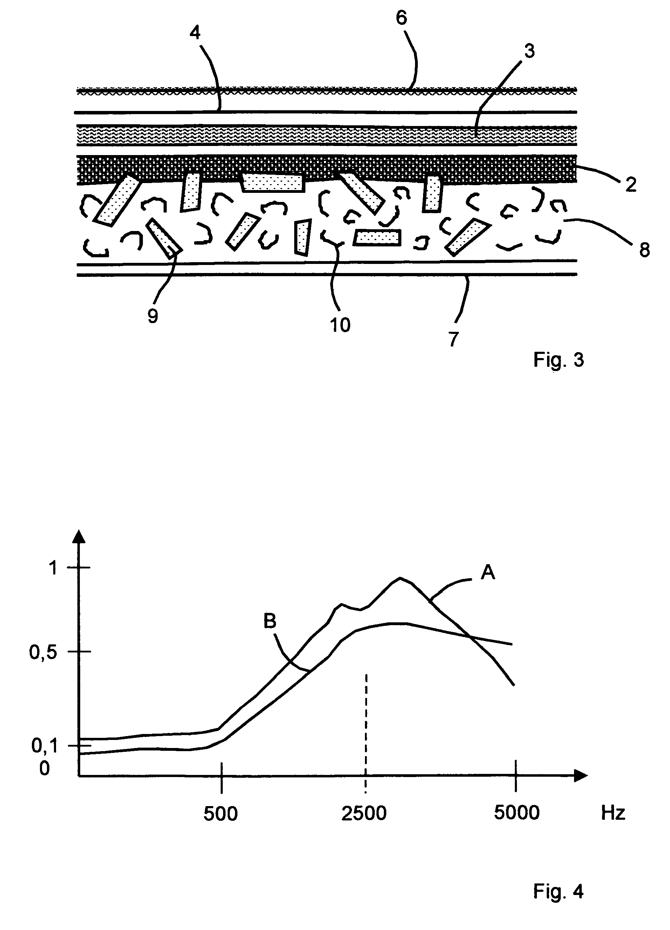

Fig. 2 and Fig. 3 show a schematic cross-sectional view of the twin-shell lightweight acoustic trim part (11), in particular a self-supporting vehicle's headliner or a rear parcel shelf in accordance with the invention. This trim part (11) comprises the above thermoplastic acoustically effective structural composite (5) with at least three layers (2, 3, and 4). In accordance with the invention this composite (5) comprises on its rear side a soft layer (2) consisting of an approximately 1 - 6 mm thick polyolefin foam and is needle-punched in order to set a desired air flow resistance R in the range of 200 Nsm⁻³ to 5000 Nsm⁻³. In a preferred embodiment this twin-shell lightweight acoustic trim part (11) further comprises an air-permeable cover layer (6), in particular a facecloth, a malifleece or a foamed textile on its front or visible face. In order to achieve good mechanical properties this twin-shell lightweight acoustic trim part (11) further comprises a multi-layer skin structure (7) on its back face. This multi-layer skin structure (7) comprises in a preferred embodiment a 40 g/m² film made of PE, a 50 g/m² glass veil, a 35 g/m² film made of PE and a 20 µm film of PA6-6. In accordance with the invention, the trim part (11) comprises a core layer (8) between the thermoplastic bonded and acoustically effective structural composite (5) and the multi-layer skin structure (7). This core layer (8) comprises elastomeric foam material (9) and/or fibre-felt material (10). In a preferred embodiment, the elastomeric material (9) is in form of foam sticks or chips having a side length of about 2 - 15 mm. In accordance with one aspect of the invention, the composite layer (5) allows to compensate for the uneven surface of the inhomogeneous core layer (8) and to achieve a smooth and soft touch feeling, i.e. a pleasant haptic effect. In particular the core layer (8) has a weight of 100 g/m² to 450 g/m² and contains approx. 50 parts of an elastomeric foam sticks or chips, approx. 20 parts of glass fibres, approx. 10 parts of polypropylene fibres material, approx. 20 parts bicomponent polyester fibres and preferably comprises additional 15% of recycled elastic foam material.

The acoustic performance of present invention becomes evident from the measurements shown in Fig. 4. Graph B represents the frequency dependent values given for the class 3 requirements for the acoustic absorption performance of trim parts. The graph A represents measured absorption values of a trim part according to the invention.

Obviously, many modifications and variations of present invention may be made in the light of the above teaching. In particular, it is to be understood that the stiffening layer may comprise fibres that preferably are arranged in a perpendicular direction to the layer's surface. As well the needling density, the needle's gauge (size), the needle's shape, the penetration depth, the local needling distribution may be varied by the man skilled in the art. Of course, it is within the scope of common practice to locally vary the thickness of the trim part and/or to use other foam materials, such as melamin or PUR foams and preselecting the resilience force of the core layer or its foam sticks or chips.

## Claims

1. Acoustically effective thermoplastic structural composite (5) comprising at least three layers (2, 3, 4), which composite is suitable for manufacturing a self-supporting twin-shell lightweight acoustic trim part, whereby this composite (5) comprises on its front side a skin layer (4), preferably a binder layer made of a thermoplastic non-woven or grid, a stiffening layer (3) made of a non-woven, preferably comprising polypropylene and glass fibres and/or copolyester fibres and/or bicomponent fibres, and on its rear side a soft layer (2) consisting of a foam, preferably a polyolefin foam, which layers are needle-punched together in order to set a desired air flow resistance R in the range of 200 Nsm⁻³ to 5'000 Nsm⁻³.

2. Composite in accordance with claim 1, **characterised in that** the skin layer (4) comprises approx. 25 g/mm² of polypropylene SMMS fibres material.

3. Composite in accordance with claim 1, **characterised in that** the stiffening layer (3) comprises 150 - 250 g/m² of a non-woven material, preferably comprising approx. 40% of polypropylene fibres and approx. 60% of glass fibres.

4. Composite in accordance with claim 1, **characterised in that** the soft layer (2) has a thickness of 0.5 - 6 mm.

5. Composite in accordance with claim 4, **characterised in that** the soft layer (2) has a density of 30 to 90 kg/m³.

6. Twin-shell lightweight acoustic trim part (11), in particular a self-supporting vehicle's headliner or a rear parcel shelf comprising an acoustically effective thermoplastic structural composite (5) with at least three layers (2, 3, 4), whereby this composite (5) comprises on its front side a skin layer (4), preferably a binder layer made of a thermoplastic non-woven or grid, a stiffening layer (3) made of a non-woven, preferably comprising polypropylene and glass fibres and/or copolyeser fibres and/or bicomponent fibres, and on its rear side a soft layer (2) consisting of a foam, preferably a polyolefin foam, which layers are needle-punched together in order to set a desired air flow resistance R in the range of 200 Nsm⁻³ to 5'000 Nsm⁻³.

7. Twin-shell lightweight acoustic trim part (11) in accordance with claim 6, **characterised in that** the trim part (11) further comprises an air-permeable cover layer (6), in particular a facecloth or a malifleece or a needle felt or a back foamed textile on its front or visible side.

8. Twin-shell lightweight acoustic trim part (11) in accordance with claim 6 **characterised in that** the trim part (11) further comprises a multi-layer skin structure (7) on its back side.

9. Twin-shell lightweight acoustic trim part (11) in accordance with claim 8, **characterised in that** the multi-layer skin structure (7) comprises an approx. 40 g/m² film made of PE, an approx. 50 g/m² glass veil, an approx. 35 g/m² film made of PE and an approx. 20 µm film of PA6-6.

10. Twin-shell lightweight acoustic trim part (11) in accordance with claim 8, **characterised in that** the trim part (11) comprises a core layer (8) between the acoustically effective thermoplastic structural composite (5) and the multi-layer skin structure (7), which core layer (8) comprises an elastomeric and resilient foam material (9) and/or fibres material (10).

11. Twin-shell lightweight acoustic trim part (11) in accordance with claim 10, **characterised in that** the core layer (8) has a weight of approx. 100 g/m² to 450 g/m² and preferably contains approx. 50 parts of elastomeric and resilient foam material (9) in the shape of sticks or chips, approx. 20 parts of glass fibres material, approx. 10 parts of polypropylene fibres material, approx. 20 parts bicomponent polyester fibres and preferably comprises additional 15% of recycled elastic foam material.

12. Twin-shell lightweight acoustic trim part (11) in accordance with claim 11, **characterised in that** the acoustically effective thermoplastic structural composite (5) compensates for the unevenness of the inhomogenious core layer (8), in order to achieve a desired haptic property, i.e. to provide for a smooth and soft touch feeling.

13. Twin-shell lightweight acoustic trim part (11) in accordance with claim 6, **characterised in that** this part is manufactured by a vacuum forming process.
